# FASCICULE DE BREVET EUROPEEN

(11) **EP 0 604 312 B1**
(45) Date de publication et mention de la délivrance du brevet: **25.09.1996**
(21) Numéro de dépôt: 93403134.5
(22) Date de dépôt: 22.12.1993
(51) Int. Cl.: F16L 19/00, F16B 39/24, F16B 43/00

(54) **Bague élastique avec témoin de mise en contrainte pour raccord**
Elastischer Ring mit Fertiganzeige für eine Verbindung
Elastic ring with make-up witness for joint

(30) Priorité: 23.12.1992 FR 9215540
(43) Date de publication de la demande: 29.06.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Merrer, Emile, F-92350 Le Plessis Robinson (FR); Morel, Michel Marius Jacques, F-77190 Dammarie Les Lys (FR)

(56) Documents cités:
- EP-A- 0 384 923
- DE-C- 255 090
- DE-C- 453 724
- DE-C- 546 576
- FR-A- 2 660 983
- GB-A- 2 027 835

## Description

La présente invention concerne un raccord étanche pour conduite de transport d'un fluide quelconque, du type comportant deux pièces à extrémités coopérantes conjuguées respectivement convexe et concave et réunies par un manchon intérieurement fileté, ledit manchon présentant un épaulement intérieur annulaire destiné à retenir l'une des pièces et étant serré par vissage sur un filetage extérieur prévu sur l'autre pièce, des moyens de freinage étant prévus pour empêcher le desserrage du manchon.

Un tel raccord est connu notamment par le document FR-A-2 660 983 qui prévoit sur la partie filetée du manchon une zone amincie et déformée pour assurer un serrage par auto-freinage de la pièce dans le manchon.

Toutefois, lorsqu'un tel raccord est utilisé sur des moteurs d'avion, il peut se produire un desserrage accidentel du fait des conditions particulières auxquelles est soumis le moteur, à savoir de fortes vibrations, des températures élevées et des fortes variations de température. Ce desserrage accidentel est inacceptable sur un moteur d'avion et de plus souvent dangereux. Il peut engendrer une fuite qui peut mettre hors service un circuit de commande, de surveillance, de sécurité. De plus, si le fluide circulant dans la canalisation desserrée est toxique ou inflammable, les conséquences de la fuite seront encore plus graves.

Il est bon que les raccords utilisés notamment en aviation soient équipés de moyens interdisant le desserrage accidentel desdits raccords, de moyens permettant d'assurer une seconde étanchéité si l'interdiction précédente est franchie, de moyens pour s'assurer qu'au montage, lesdits raccords ont été serrés convenablement et de moyens pour signaler que lesdits raccords sont desserrés.

US-A-3 325 192 propose un raccord de canalisation avec un témoin de serrage émergeant de l'écrou à la suite d'une déformation ultérieure de la pièce d'ajustage au serrage. il n'est pas évident que ce témoin de serrage permette de signaler un desserrage accidentel ultérieur. De plus, ce raccord ne comporte pas de moyens permettant de réaliser une seconde étanchéité en cas de desserrage.

FR-A-2 421 300 montre un dispositif de fixation par vis ou écrou d'une roue à un moyen de véhicule dans lequel il est prévu entre la tête de vis et la roue une rondelle axialement élastique munie d'au moins un prolongement axial extérieur en direction opposée au déplacement axial de la vis ou écrou provoqué par le serrage. Ce prolongement axial comporte un moyen terminal qui s'emboîte dans la vis ou écrou lorsque l'écrasement axial de la rondelle correspond à l'effort de serrage souhaité et dont la destruction au moins partielle avertit d'un desserrage de roue. Ce document ne suggère pas de disposer une telle rondelle dans un raccord de canalisation.

Le but de la présente invention est de proposer un raccord équipé de moyens de freinage destinés à empêcher le desserrage du manchon, et qui remplissent également les autres fonctions souhaités à savoir : une seconde étanchéité en cas de desserrage et la fonction de témoin de serrage ou desserrage.

L'invention atteint son but par le fait que lesdits moyens de freinage comportent une bague élastique interposée entre l'épaulement annulaire du manchon et la pièce retenue par ledit épaulement, et par le fait que ladite bague est munie d'au moins une patte qui s'étend entre ledit manchon et ladite pièce dans la direction générale opposée au déplacement axial du manchon provoqué par le serrage, ladite bague étant susceptible de s'aplatir lorsqu'on serre ledit manchon et ladite patte ayant une longueur telle que l'extrémité libre de ladite patte ressort sur la face d'extrémité dudit manchon située du côté de ladite pièce, lorsque ledit manchon est serré.

Avantageusement, la pièce retenue par le manchon présente entre la face d'extrémité dudit manchon et ledit épaulement une paroi conique dont le diamètre va croissant dans le sens du déplacement axial du manchon provoqué par le serrage.

En l'absence de contrainte de serrage, ladite bague a une forme globalement conique, son bord extérieur étant situé du côté dudit épaulement et ladite patte est disposée au voisinage de ladite paroi conique, l'aplatissement de ladite bague par suite du serrage provoquant le pivotement de ladite patte vers ledit manchon.

grâce à cette structure, la bague élastique empêche le desserrage accidentel du manchon. Lors du serrage, les pattes vont sortir à l'arrière du manchon. Elles constituent le témoignage visible du serrage. En cas de desserrage accidentel du manchon, la bague élastique retrouve sa forme initiale, et repousse la pièce retenue dans le manchon contre l'autre pièce pour assurer une seconde étanchéité.

D'autres avantages et caractéristiques de l'invention ressortiront à la lecture de la description suivante fait à titre d'exemple et en référence aux dessins annexés dans lesquels :
la figure 1 montre en coupe le raccord muni d'une bague conforme à l'invention et en cours de serrage,
la figure 2 montre en coupe le raccord de la figure 1 en position de serrage,
la figure 3 est une vue axiale de la bague utilisée dans le raccord représenté sur les figures 1 et 2,
la figure 4 est une coupe radiale selon la ligne IV IV de la figure 3,
la figure 5 est une coupe radiale selon la ligne V V de la figure 3,
la figure 6 est une coupe d'un raccord muni d'une bague selon un deuxième mode de réalisation,
la figure 7 est une vue axiale du raccord de la figure 6,
la figure 8 est une vue de face de la bague utilisée dans les figures 6 et 7, et
la figure 9 est une vue de côté de la bague de la figure 8.

En se rapportant à ces figures, on voit un raccord étanche 1 comprenant essentiellement une première pièce 2 à extrémité concave 3, une deuxième pièce 4 à extrémité convexe 5 conjuguée de l'extrémité concave de la première pièce 1, et un manchon 6 extérieur concentrique aux pièces 2 et 4 et permettant le serrage de ces deux pièces 2 et 4 bout à bout et l'une contre l'autre par leurs extrémités conjuguées convexe et concave 3 et 5.

La première pièce 2, reçue dans le manchon 6, comporte, à l'opposé de son extrémité concave 3, un épaulement 7 par lequel elle prend appui sur un épaulement intérieur annulaire 8 du manchon 6. Comme on le comprend une conduite, non représentée, pourra être fixée par tout moyen approprié sur l'extrémité 9 de la première pièce 2.

La deuxième pièce 4, à laquelle peut également être fixée, par tout moyen approprié, une autre conduite (non représentée), comporte un filetage extérieur 10 pouvant coopérer avec un filetage 11 prévu à l'intérieur du manchon 6.

Le manchon 6 présente, du côté opposé au filetage 11, une face d'extrémité 12. La première pièce 2 présente en regard de la partie de manchon comprise entre la face d'extrémité 12 et l'épaulement 8 une paroi conique 13 dont le diamètre va croissant dans le sens du déplacement axial D du manchon 6 provoqué par le serrage. une cavité annulaire 14 est ainsi ménagée entre la paroi conique 13 et le manchon 6, cette cavité débouchant sur la face d'extrémité 12 du manchon 6.

Selon l'invention, il est prévu entre les épaulements 7 et 8 une bague élastique 15 de freinage par friction qui comporte au moins une patte 16 qui est disposée dans la cavité 14 et qui s'étend vers la face d'extrémité 12 du manchon 6.

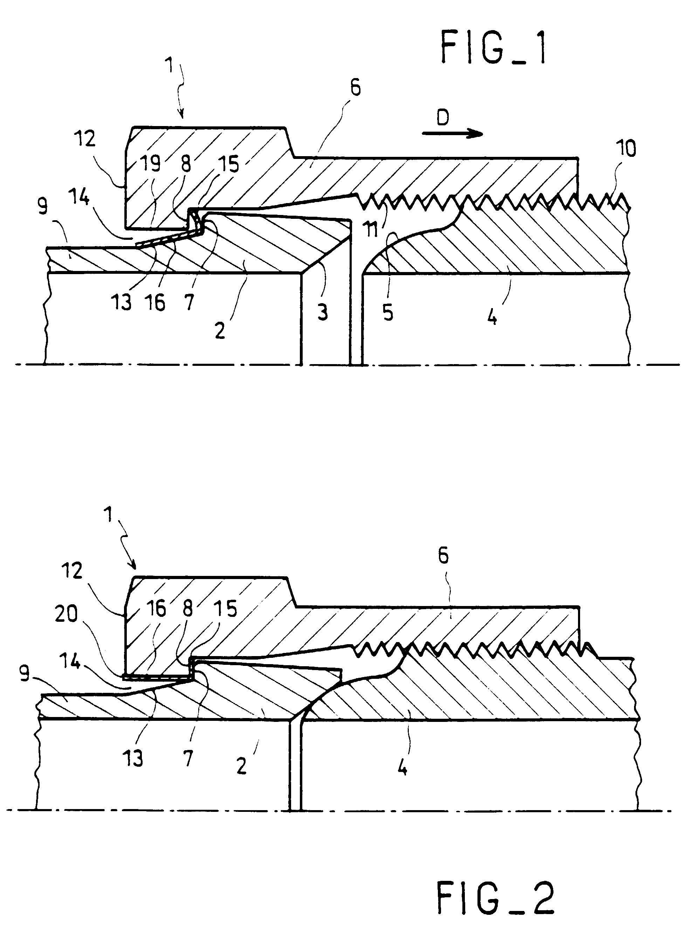

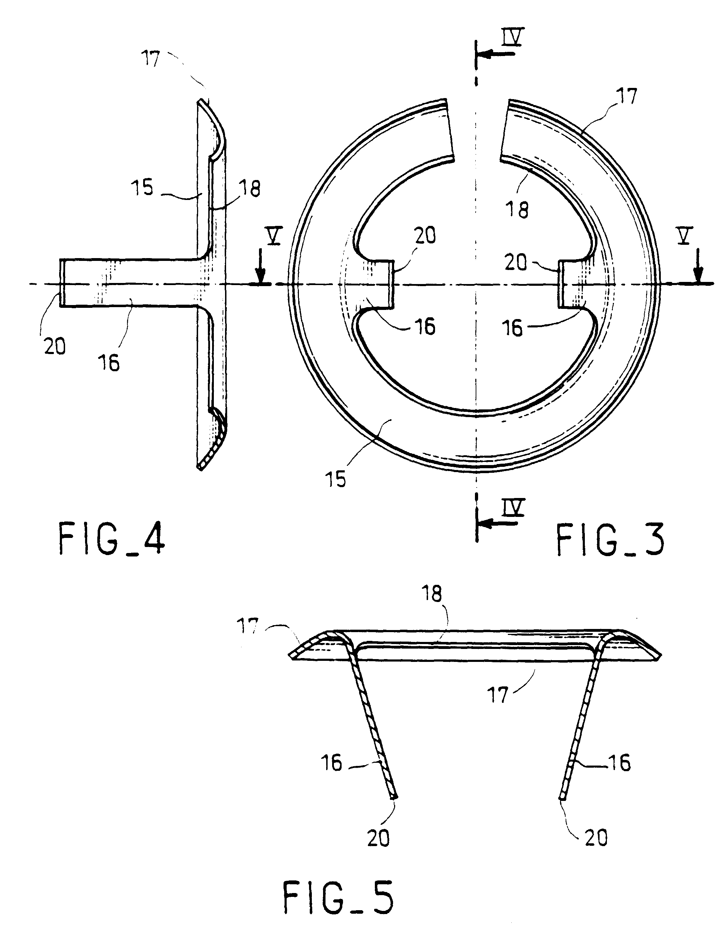

Selon un premier mode de réalisation, représenté sur les figures 1 à 5, la bague 15 est formée par une rondelle ouverte de forme générale conique dont le bord extérieur 17, en l'absence de contrainte de serrage, est situé du côté de l'épaulement 8 du manchon 6 et dont le bord intérieur 18 est situé dans l'angle formé par l'épaulement 7 de la première pièce 2 et la paroi conique 12. Les pattes 16 s'étendent perpendiculairement à la paroi de la bague 15 et en l'absence de contrainte de serrage, elles reposent sur la paroi conique 12 de la première pièce 2.

Lorsqu'on serre le manchon 6 sur la deuxième pièce 4, la bague 15 s'aplatit entre les épaulements 7 et 8, les pattes 16 pivotent alors autour du bord intérieur 18 et viennent en appui contre la paroi intérieure 19 du manchon 6 lorsque le couple de serrage est suffisant. La longueur des pattes 16 est calculée de telle manière que leurs extrémités 20 ressortent sur la face d'extrémité 12 du manchon 6.

En cas de desserrage partiel accidentel du manchon 6, la bague 15 tend à reprendre sa forme initiale du fait de son élasticité. Ceci entraîne un pivotement inverse des pattes 16 qui s'écartent de la paroi intérieure 19 du manchon 6 et se rapprochent de la paroi conique 12. De plus, leurs extrémités 20 s'effacent dans la cavité 14. Les pattes 16 constituent ainsi des témoins de serrage ou desserrage du manchon 6. La bague élastique 15 permet également d'assurer l'étanchéité du raccord 1, en cas de desserrage partiel, car elle exerce une force sur la première pièce 1 dans le sens de la flèche D qui maintient l'extrémité 3 de ladite première pièce 2 en appui étanche sur l'extrémité 5 de la deuxième pièce 4.

Selon une variante de réalisation, non représentée, sur les dessins, la rondelle 15 n'est pas ouverte mais elle comporte une pluralité de fentes radiales destinées à diminuer sa dureté.

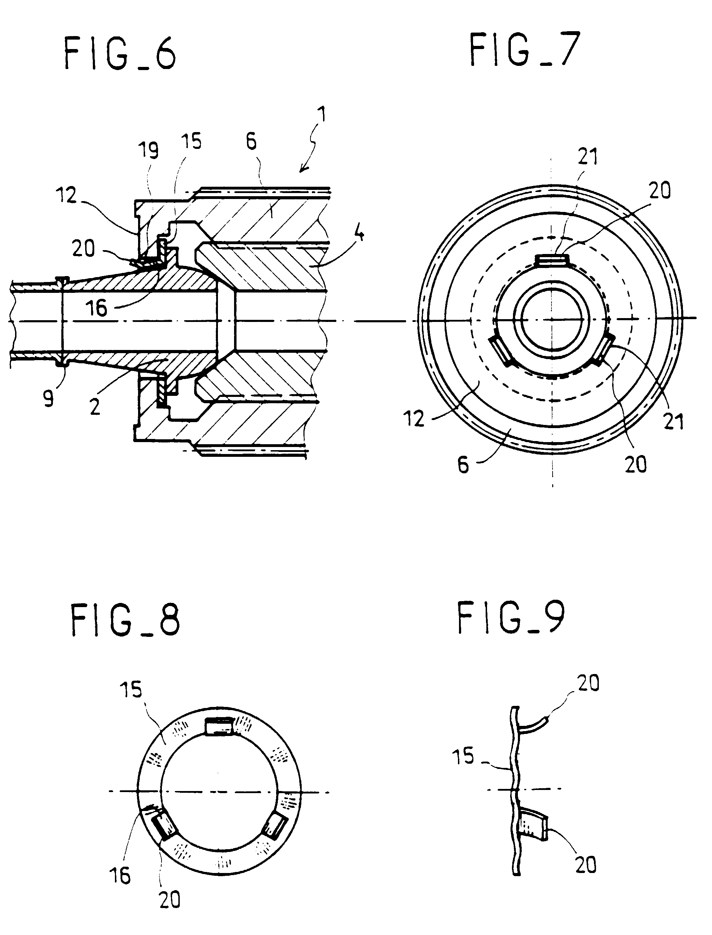

Selon un deuxième mode de réalisation représenté sur les figures 6 à 9, la bague élastique 15 est formée d'une rondelle fermée comportant des ondulations qui s'écrasent au serrage. L'effet de freinage peut être renforcé avec ce type de bague si les surfaces des épaulements 7 et 8 sont légèrement ondulées de la même façon. La bague ondulée 15 comportent également des pattes 16 qui s'étendent axialement vers la paroi d'extrémité 12 et qui logent dans des rainures axiales 21 formées dans la paroi intérieure 19 du manchon 6.

L'extrémité 20 des pattes 16 est recourbée vers l'extérieur. Lors du serrage du manchon 6, I'extrémité 20 des pattes ressort sur la face d'extrémité 12, du fait que la bague élastique 15 s'écrase en faisant office de frein d'écrou. Les extrémités 20 constituent les témoins de serrage. En cas de perte de serrage accidentel du manchon 6, la rondelle élastique ondulée reprend sa forme initiale et plaque la première pièce 2 sur la deuxième pièce 4.

Le montage de la bague élastique 15 et du manchon 6 est réalisé de la manière suivante :
- on déforme vers l'axe de la bague 15 les pattes 16 afin qu'elles puissent passer dans les rainures 21 du manchon,
- on les relâche ensuite, les pattes 16 reprenant leurs positions initiales,

La bague 15 et la manchon 6 sont ainsi prisonniers l'un de l'autre.

## Revendications

1. Raccord étanche pour conduite de transport d'un fluide quelconque, du type comportant deux pièces (2, 4) à extrémités coopérantes (3, 5) conjuguées respectivement convexe et concave et réunies par un manchon (6) intérieurement fileté, ledit manchon (6) présentant un épaulement intérieur annulaire (8) destiné à retenir l'une des pièces (2) et étant serré par vissage sur un filetage extérieur (10) prévu sur l'autre pièce (4), des moyens de freinage étant prévus pour empêcher le desserrage dudit manchon (6),
caractérisé en ce que lesdits moyens de freinage comportent une bague élastique (15) interposée entre l'épaulement annulaire (8) du manchon (6) et la pièce retenue (2) par ledit épaulement (8), et par le fait que ladite bague (15) est munie d'au moins une patte (16) qui s'étend entre ledit manchon (6) et ladite pièce (2)dans la direction générale opposée au déplacement axial (D) du manchon provoqué par le serrage, ladite bague (16) étant susceptible de s'aplatir lorsqu'on serre ledit manchon (6) et ladite patte (16) ayant une longueur telle que l'extrémité libre (20) de ladite patte (16) ressort sur la face d'extrémité (12) dudit manchon (6) située du côté de ladite pièce (2), lorsque ledit manchon (6) est serré.

2. Raccord selon la revendication 1 dans lequel la pièce (2) retenue par le manchon (6) présente entre la face d'extrémité (12) dudit manchon (6) et ledit épaulement (8) une paroi conique (13) dont le diamètre va croissant dans le sens du déplacement axial (D) du manchon (6) provoqué par le serrage,
caractérisé en ce que, en l'absence de contrainte de serrage, ladite bague (15) a une forme globalement conique, son bord extérieur (17) étant situé du côté dudit épaulement (8) et ladite patte (16) est disposée au voisinage de ladite paroi conique (13), l'aplatissement de ladite bague (15) par suite du serrage provoquant le pivotement de ladite patte (16) vers ledit manchon (6).

3. Raccord selon la revendication 2, caractérisé en ce que ladite bague (15) est ouverte.

4. Raccord selon la revendication 2, caractérisé en ce que ladite bague (15) comporte des fentes radiales.

5. Raccord selon la revendication 1, caractérisé en ce que ladite bague (15) est réalisée sous forme d'une rondelle ondulée.

6. Raccord selon la revendication 5, caractérisé en ce que ladite patte (16) loge dans une rainure axiale (21) ménagée dans la paroi intérieure dudit manchon.

7. Raccord selon la revendication 6, caractérisé en ce que l'extrémité libre (20) de ladite patte (16) est repliée radialement vers l'extérieur.

## Patentansprüche

1. Dichter Anschluß für Leitungen zur Beförderung einer beliebigen Flüssigkeit, bestehend aus zwei Teilen (2, 4) mit einander zugeordneten, zusammenwirkenden Enden (3, 5), die konvex bzw. konkav sind und mit einer Muffe (6) mit Innengewinde zusammengehalten werden, wobei die genannte Muffe (6) einen ringförmigen inneren Absatz (8) aufweist, der dazu bestimmt ist, das eine der Teile (2) zu blockieren, und auf einem Außengewinde (10) festgeschraubt ist, das an dem anderen Teil (4) vorgesehen ist, wobei Sicherungsmittel vorgesehen sind, um das Sich-Lösen der genannten Muffe (6) zu verhindern,
dadurch gekennzeichnet,
daß die genannten Sicherungsmittel aus einem Federring (15) bestehen, der zwischen dem ringförmigen Absatz (8) der Muffe (6) und dem von dem genannten Absatz (8) blockierten Teil (2) angeordnet ist, und daß der genannte Ring (15) mit mindestens einer Zunge (16) versehen ist, die sich zwischen der genannten Muffe (6) und dem genannten Teil (2) in allgemein entgegengesetzter Richtung zur axialen Verschiebungsrichtung (D) der Muffe beim Festziehen erstreckt, wobei der genannte Ring (15) sich abflachen kann, wenn die genannte Muffe (6) festgezogen wird, und wobei die genannte Zunge (16) eine Länge dergestalt hat, daß das freie Ende (20) der genannten Zunge (16) über die dem genannten Teil (2) zugewandte Endseite (12) der genannten Muffe (6) hinaussteht, wenn die genannte Muffe (6) festgezogen wird.

2. Anschluß nach Anspruch 1, bei dem das von der Muffe (6) blockierte Teil (2) zwischen der Endseite (12) der genannten Muffe (6) und dem genannten Absatz (8) eine konische Wand (13) aufweist, deren Durchmesser sich in der axialen Verschiebungsrichtung (D) der Muffe (6) beim Festziehen vergrößert, dadurch gekennzeichnet, daß der genannte Ring (15) eine allgemein konische Form hat, wobei sein Außenrand (17) dem genannten Absatz (8) zugewandt ist und die genannte Zunge (16) in der Nähe der genannten konischen Wand (13) angeordnet ist, wobei das Abflachen des genannten Rings (15) als Folge des Festziehens eine Drehbewegung der genannten Zunge (16) in Richtung der genannten Muffe (6) bewirkt.

3. Anschluß nach Anspruch 2, dadurch gekennzeichnet, daß der genannte Ring (15) offen ist.

4. Anschluß nach Anspruch 2, dadurch gekennzeichnet, daß der genannte Ring (15) radiale Schlitze aufweist.

5. Anschluß nach Anspruch 1, dadurch gekennzeichnet, daß der genannte Ring (15) in Form einer gewellten Federscheibe ausgeführt ist.

6. Anschluß nach Anspruch 5, dadurch gekennzeichnet, daß die genannte Zunge (16) in einer axialen Rille (21) aufgenommen wird, die in der Innenwand der genannten Muffe ausgeführt ist.

7. Anschluß nach Anspruch 6, dadurch gekennzeichnet, daß das freie Ende (20) der genannten Zunge (16) radial nach außen umgebogen ist.

## Claims

1. A hermetic coupling for any fluid-conveying duct of the kind comprising two members (2, 4) having cooperating mating ends (3, 5), one end being convex and the other concave, the two members (2, 4) being connected by an internally screwthreaded sleeve (6) which has an inner annular shoulder (8) adapted to retain one (2) of the members and which is tightened by being screwed onto an external screwthread (10) of the other member (4), locking means being provided to prevent the sleeve (6) from loosening,
characterised in that the locking means comprise a resilient ring (15) interposed between the annular shoulder (8) of the sleeve (6) and the member (2) retained by the shoulder (8), and the ring (15) has at least one tab (16) which extends between the sleeve (6) and the member (2) in the general direction opposite to the axial movement (D) of the sleeve caused by the tightening, the ring (16) being adapted to be flattened in response to the tightening of the sleeve (6), the tab (16) having a length such that its free end (20) stands out from the sleeve end face (12) disposed near the member (2) when the sleeve (6) is tight.

2. A coupling according to claim 1 wherein the member (2) retained by the sleeve (6) has between the sleeve end face (12) and the shoulder (8) a conical wall (13) whose diameter increases in the direction of the axial movement (D) of the sleeve (6) produced by the tightening thereof,
characterised in that in the absence of tightening force the ring (15) has a generally conical shape, its outer edge (17) being disposed near the shoulder (8), and the tab (16) is disposed near the conical wall (13), the flattening of the ring (16) caused by the tightening of the sleeve (6) causing the tab (16) to pivot towards the sleeve (6).

3. A coupling according to claim 2, characterised in that the ring (15) is open.

4. A coupling according to claim 2, characterised in that the ring (15) is formed with radial slots.

5. A coupling according to claim 1, characterised in that the ring (15) is in the form of a corrugated washer.

6. A coupling according to claim 5, characterised in that the tab (16) is received in an axial groove (21) in the sleeve inner wall.

7. A coupling according to claim 6, characterised in that the free end (20) of the tab (16) is bent radially outwards.
